# DEMANDE DE BREVET EUROPEEN

(11) **EP 2 426 656 A1**
(43) Date de publication de la demande: **07.03.2012**
(21) Numéro de dépôt: 11290388.5
(22) Date de dépôt: 02.09.2011
(51) Int. Cl.: G08C 17/00, H05B 37/02, H05B 33/08

(54) **Télécommande sans fil agencée pour commander au moins deux équipements électriques distincts**

(30) Priorité: 02.09.2010 FR 1056983
(71) Demandeur: Denovo Interactive Sarl, 67200 Strasbourg (FR)
(72) Inventeur: Reydel, Nicolas, 7794 Kehl (DE)
(74) Mandataire: Becker, Caroline

(57) **Abrégé**

Télécommande (10) sans fil agencée pour commander trois équipements électriques (4,2,5,6) distincts, notamment un équipement lumineux (4) en tant que premier équipement, un équipement motorisé (2) d'un sommier (2) en tant que deuxième équipement et un équipement lumineux d'ambiance (5,6) en tant que troisième équipement. Elle est caractérisée en ce qu'elle comporte des moyens de fixation (15) agencés pour l'assembler à un support (40) couplé audit premier équipement (4) lorsqu'elle occupe une position passive dans laquelle elle n'est pas manipulée par un utilisateur, et pour la retirer dudit support (40) lorsqu'elle occupe une position active dans laquelle elle est manipulée par un utilisateur, en ce qu'elle comporte des connexions électriques (12) agencées pour, en position passive, se raccorder sur des connexions électriques (42) correspondantes prévues dans ledit support (40) de sorte à commander l'alimentation électrique dudit premier récepteur et recharger ladite batterie (13) sur le réseau d'alimentation électrique, et en ce qu'elle comporte, en position active, deux modes de fonctionnement dans lesquels lesdits moyens de commande (T1-T5) sont communs et agencés pour commander les fonctions dudit deuxième équipement (2) dans un premier mode de fonctionnement et les fonctions dudit troisième équipement (5,6) dans un second mode de fonctionnement.

## Description

### Domaine technique :

La présente invention concerne une télécommande sans fil agencée pour commander au moins deux équipements électriques distincts, notamment un équipement lumineux en tant que premier équipement tel qu'une lampe, un plafonnier, une lampe de chevet, un bandeau lumineux ou similaire, et un équipement motorisé en tant que deuxième équipement tel qu'un lit, un canapé, un fauteuil, un siège ou similaire, ladite télécommande comportant au moins un boîtier apte à être manipulé par un utilisateur et comportant des moyens de commande correspondant à une ou plusieurs fonctions de chacun desdits équipements, une carte électronique alimentée par au moins une batterie et agencée pour recevoir des ordres desdits moyens de commande et les transformer en actions correspondant auxdites fonctions pour chacun desdits équipements par des moyens de communication sans fil entre au moins un émetteur prévu dans ladite télécommande et un récepteur couplé auxdits équipements.

### Technique antérieure :

La technologie liée aux télécommandes sans fil est largement connue et répandue dans de nombreux domaines d'activité, tels que les appareils audiovisuels, la domotique, la télésurveillance, les véhicules, les jouets, etc. Le domaine qui intéresse particulièrement la présente invention concerne le mobilier destiné à recevoir les personnes en position assise et/ou allongée, comportant des zones réglables par une motorisation permettant de modifier à souhait la position de la personne de manière assistée, tel que les lits , les canapés, les convertibles, les fauteuils, les sièges, etc. à usage domestique, médicalisé ou similaire. Dans le cas par exemple d'un lit motorisé à tête et pied relevables, la télécommande qui est fournie, avec ou sans fil, est dédiée exclusivement à la commande des moteurs du sommier. Lorsqu'elle n'est pas utilisée, elle est rangée au bord du lit, accrochée ou clippée par exemple sur le cadre du sommier. Par ailleurs, les chambres à coucher, les salons et autres pièces de vie dans lesquelles est placé ce type de mobilier sont équipées de sources de lumière de différentes natures, par exemple, de plafonniers, de lampes de chevet, de liseuses, de bandeaux lumineux, de lampadaires, de lampes d'ambiance ou similaire pour créer des ambiances adaptées à différents moments de la journée, chaque source de lumière étant commandée individuellement et traditionnellement par un interrupteur tout ou rien, un variateur ou similaire. A ce jour, il n'existe aucune télécommande pour sommier motorisé capable de commander les différentes sources de lumière pour simplifier et optimiser la gestion des équipements électriques équipant une chambre à coucher, un salon ou toute autre pièce de vie. Cette application n'est bien entendu pas limitative et s'étend à toute autre application nécessitant la commande de plusieurs équipements électriques.

Il existe par ailleurs des télécommandes dites universelles qui sont agencées pour commander plusieurs équipements électriques sous réserve que chaque équipement à commander soit reconnu par la télécommande et réponde à un protocole de communication dédié. Un exemple est décrit dans la publication WO 2007/072296 ayant pour objet un dispositif et un procédé permettant l'activation d'une télécommande lors de sa mise en service, et l'établissement d'une communication à distance entre la télécommande et un équipement telle qu'une lampe susceptible d'être pilotée par la télécommande. A cet effet, la télécommande et la lampe comportent chacune des moyens d'emboîtement de forme complémentaire associés à des interrupteurs reliés à des moyens d'activation respectivement de la télécommande et de la lampe. L'emboîtement de la télécommande dans la lampe provoque ainsi une activation simultanée de ces dernières suite à laquelle la télécommande émet un signal tandis que la lampe reconnaît ce signal lui permettant à elle seule d'être pilotée à distance par la télécommande. Cette connexion n'a d'autre but que de permettre à la télécommande et à la lampe destinée à être pilotée par la télécommande de se reconnaître et n'intervient par conséquent qu'à la mise en route de ladite télécommande.

### Exposé de l'invention:

La présente invention apporte une solution aux problèmes évoqués ci-dessus en proposant une télécommande multifonction, ergonomique et simple d'utilisation, permettant de commander de manière optimisée plusieurs équipements individuellement au moyen d'une même télécommande spécifiquement dédiée à cet usage et agencée pour réaliser toutes les fonctions liées à chacun desdits équipements commandés.

Dans ce but, l'invention concerne une télécommande du genre indiqué en préambule, caractérisée en ce qu'elle comporte des moyens de fixation agencés pour l'assembler à un support couplé audit premier équipement lorsqu'elle occupe une position passive dans laquelle elle n'est pas manipulée par un utilisateur, et pour la retirer dudit support lorsqu'elle occupe une position active dans laquelle elle est manipulée par un utilisateur, en ce qu'elle comporte des connexions électriques agencées pour, en position passive, se raccorder sur des connexions électriques correspondantes prévues dans ledit support de sorte à commander l'alimentation électrique dudit premier équipement et à recharger ladite batterie sur le réseau d'alimentation électrique, et en ce qu'elle comporte, en position active, au moins un premier mode de fonctionnement dans lequel lesdits moyens de commande sont agencés pour commander les fonctions dudit deuxième équipement.

Lesdites connexions électriques peuvent comporter au moins une première paire de plots de contact, disposée dans le boitier de la télécommande, raccordée aux bornes de ladite batterie et agencée pour se connecter audit réseau d'alimentation électrique lorsque la télécommande est assemblée au support du premier équipement pour commander l'éclairage dudit premier équipement et recharger ladite batterie.

De manière préférentielle, lesdites connexions électriques comportent une seconde paire de plots de contact, disposée dans le boitier de la télécommande à distance de ladite première paire de plots de contact, couplée à au moins une diode électroluminescente de puissance prévue dans ledit boîtier et apte à créer un faisceau de lumière, ladite seconde paire de plots de contact étant raccordée aux bornes de ladite batterie et agencée pour se connecter audit réseau d'alimentation électrique lorsque la télécommande est assemblée au support du premier équipement pour commander l'éclairage de ladite diode électroluminescente de puissance et recharger ladite batterie.

Dans une forme de réalisation préférée, les moyens de fixation sont magnétiques et comportent au moins un aimant permanent disposé dans le boîtier de la télécommande et agencé pour créer un couplage magnétique avec un aimant permanent complémentaire disposé dans le support du premier équipement lorsque ladite télécommande est en position passive.

Avantageusement, la télécommande comporte au moins deux aimants permanents disposés dans son boîtier à distance l'un de l'autre et agencés pour permettre l'assemblage de ladite télécommande au support du premier équipement dans deux positions différentes.

Dans la forme de réalisation préférée, les moyens de commande intégrés au boitier de la télécommande comportent au moins des touches de commande qui peuvent être des touches sensitives et au moins un capteur de mouvement qui peut être un accéléromètre.

De manière préférentielle, la télécommande comporte au moins deux modes de fonctionnement, un premier mode de fonctionnement pour commander ledit deuxième équipement et un second mode de fonctionnement pour commander un troisième équipement électrique distinct, notamment un équipement lumineux d'ambiance. Dans ce cas, les moyens de commande utilisés dans chacun des modes de fonctionnement sont communs, et ledit capteur de mouvement est agencé pour basculer d'un mode de fonctionnement à l'autre par détection de secousses appliquées à ladite télécommande.

Les touches de commande sont avantageusement couplées audit capteur de mouvement pour actionner certaines fonctions desdits équipements par rotation de ladite télécommande entre une position levée et une position abaissée.

Lesdits moyens de commande peuvent être complétés par au moins un interrupteur général intégré audit boitier et agencé pour réinitialiser ladite télécommande, cet interrupteur pouvant être couplé à un microphone agencé pour capter le souffle d'un utilisateur à travers un orifice ménagé dans ledit boîtier au droit dudit microphone.

Le boîtier de la télécommande est de préférence constitué d'une coque translucide. Dans ce cas, la télécommande comporte à l'intérieur dudit boîtier des diodes électroluminescentes d'ambiance agencées pour rétro-éclairer ledit boîtier lorsque ladite télécommande est en position active.

Chaque touche de commande peut avantageusement être couplée à une diode électroluminescente d'ambiance agencée pour varier l'intensité lumineuse de ladite touche de commande en fonction du temps d'appui sur ladite touche.

Les moyens de commande peuvent en outre comporter un gyroscope disposé dans le boîtier de la télécommande et associé audit capteur de mouvement pour identifier la position spatiale de la télécommande et analyser son déplacement pour en déduire la commande à activer.

### Description sommaire des dessins:

La présente invention et ses avantages apparaîtront mieux dans la description suivante d'un mode de réalisation donné à titre d'exemple non limitatif, en référence aux dessins annexés, dans lesquels :
- la figure 1 est une vue d'implantation de la télécommande selon l'invention appliquée au domaine de la literie,
- la figure 2 est une vue de face de la télécommande associée au lit de la figure 1, et
- la figure 3 est une vue intérieure schématique de la télécommande de la figure 2.

### Illustrations de l'invention et meilleure manière de la réaliser :

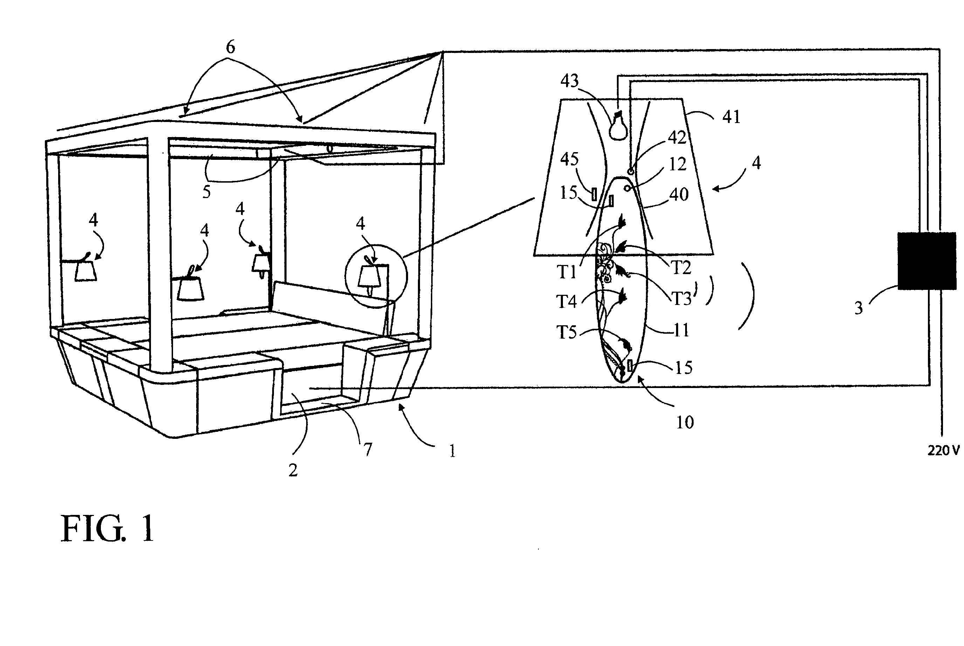

La télécommande 10 selon l'invention est illustrée et détaillée pour une application particulière au domaine de la literie. Bien entendu cette application n'est pas limitative et s'étend notamment aux autres meubles agencés pour recevoir des personnes en position assise et/ou allongée, comportant des zones réglables par une motorisation permettant de modifier à souhait la position de la personne de manière assistée, tel que les canapés, les convertibles, les fauteuils, les sièges, etc. à usage domestique, médicalisé ou similaire. La figure 1 montre un exemple d'un lit à baldaquin 1 spécifique équipé de deux sommiers 2 motorisés dont les moteurs (non visibles) sont logés dans la partie inférieure du lit et raccordés au réseau d'alimentation électrique par l'intermédiaire d'une centrale de gestion 3 contenant un récepteur. Dans l'exemple représenté, ce lit est équipé de deux lampes de chevet 4 à proximité de la tête de lit, de deux autres lampes de chevet 4 complémentaires à proximité du pied de lit, de bandeaux lumineux 5 disposés sur le pourtour inférieur du plafond du baldaquin et de spots 6 sur le dessus du plafond du baldaquin. Deux réglettes de lumière 7 matérialisent les seuils d'accès de part et d'autre du lit. Les différents luminaires sont en partie ou en totalité raccordés au réseau d'alimentation électrique par l'intermédiaire de ladite centrale de gestion 3, et sont de préférence équipés de diodes luminescentes (LEDs), étant précisé que tout autre type de source lumineuse est possible. On peut choisir des LEDs de puissance monochromatique générant une lumière d'une seule couleur, notamment pour les lampes de chevet 4 et les réglettes 7, et des LEDs d'ambiance polychromatiques générant une lumière de couleur variable obtenue par modulation de leur tension d'alimentation (LEDs RGB -Red Green and Blue), notamment pour les bandeaux 5 et les spots 6. Les réglettes de lumière 7 peuvent être directement raccordées au réseau d'alimentation électrique sans l'intermédiaire du boîtier 3 et peuvent être commandées simplement par des capteurs de présence. Bien entendu toute autre configuration de lit ainsi que tout autre équipement lumineux sont envisageables.

Les lampes de chevet 4 sont également spécifiques et comportent dans l'exemple représenté, un support 40 disposé dans un abat-jour 41 de forme tronconique pour recevoir une télécommande 10 formant ainsi un pied de lampe. Dans l'exemple représenté, on utilise deux télécommandes 10, une pour chaque sommier 2, correspondant chacune à sa lampe de chevet 4 en tête de lit. Bien entendu, les lampes de chevet 4 peuvent avoir des formes différentes et la télécommande 10 peut être insérée à d'autres emplacements. De même, le nombre de télécommande 10 peut être différent de deux. Dans cette position passive, la télécommande 10 est rangée lorsqu'elle n'est pas manipulée par un utilisateur et sert d'interface pour commander l'allumage et l'extinction des ampoules 43 des lampes de chevet 4, comme expliqué plus loin. Ces ampoules 43 sont de préférence des LEDs de puissance.

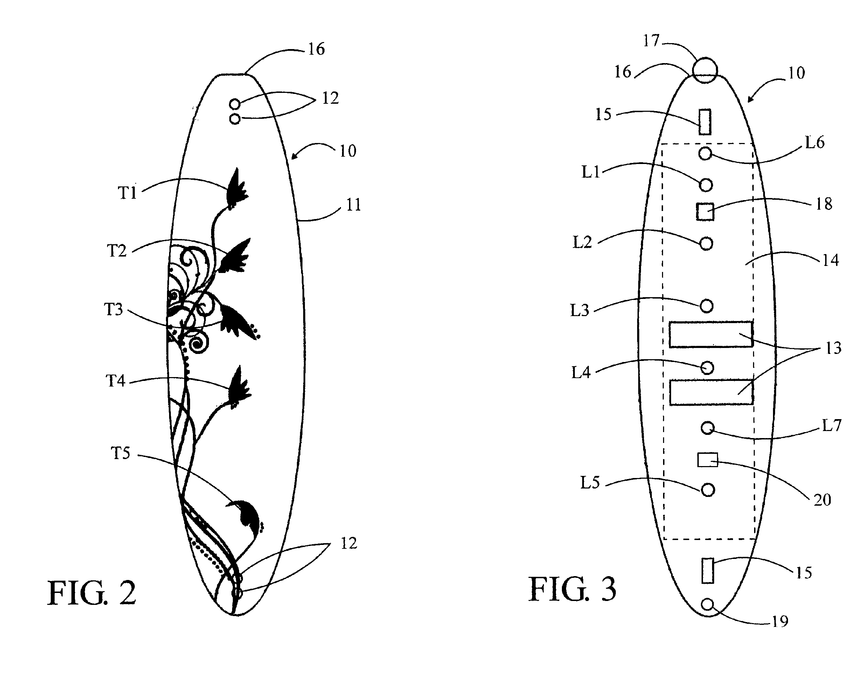

Cette télécommande 10 représentée plus en détail aux figures 2 et 3 comporte un boîtier 11 allongé de section ovoïde dans deux plans perpendiculaires permettant une préhension aisée et une manipulation ergonomique par une seule main. Ce boîtier 11 est réalisé de préférence dans une coque en matière translucide pour pouvoir être rétro-éclairé de l'intérieur. La télécommande 10 comporte à ses deux extrémités deux plots de contact 12 raccordés électriquement aux bornes de raccordement d'une ou de plusieurs batteries 13 logées à l'intérieur du boîtier 11 pour alimenter une carte électronique 14 pourvue d'un émetteur pour communiquer avec le récepteur disposé dans la centrale de gestion 3 de préférence par ondes radio. Tout autre moyen de communication sans fil est également possible. Au besoin, une communication filaire peut être également envisagée. Les plots de contact 12 sont agencés pour se connecter électriquement à deux plots de contact 42 correspondants prévus dans le support 40 des lampes de chevet 4, notamment pour recharger les batteries 13 lorsque la télécommande 10 est en position passive (cf. fig. 1) et pour envoyer un signal à ladite centrale de gestion 3 indiquant que la télécommande 10 est dans son support 40. La télécommande 10 comporte également à ses deux extrémités un aimant permanent 15 agencé pour fermer un circuit magnétique avec un aimant permanent 45 correspondant prévu dans le support 40 des lampes de chevet 4 et solidariser la télécommande 10 dans ledit support. La forme du boîtier 11 complémentaire à celle du support 40 permet un auto-positionnement et un auto-centrage de la télécommande 10 dans ledit support. Ainsi, les opérations de mise en place et de retrait de la télécommande 10 dans son support 40 sont rapides, faciles et réalisables d'une seule main. La télécommande 10 comporte une ouverture 16 à l'une de ses extrémités dans laquelle est logée une diode luminescente 17, par exemple une LED de puissance, apte à fournir un faisceau de lumière externe. La télécommande 10 peut être montée dans son support 40 par l'une ou l'autre de ses extrémités. Dans un sens de montage, lorsque la LED de puissance 17 est orientée vers l'intérieur du support 40, la télécommande 10 commande l'allumage et l'extinction de l'éclairage des lampes de chevet 4 par l'intermédiaire de la centrale de gestion 3. Dans le sens inverse de montage, lorsque la LED de puissance 17 est orientée vers l'extérieur du support 40, c'est la LED de puissance 17 qui est alimentée et sert de liseuse.

La télécommande 10 comporte plusieurs touches de commande T1, T2, T3, T4 et T5, alignées sur la face externe du boîtier 11 et formées de préférence de touches sensitives matérialisées par un dessin. Tout autre moyen de commande équivalent peut convenir, tel que des touches à enfoncement. Elle comporte plusieurs LEDs d'ambiance L1, L2, L3, L4 et L5, de type LED RGB, logées à l'intérieur du boîtier 11 chacune associée à une des touches de commande et permettant de varier l'intensité lumineuse de la touche de commande en fonction du temps d'appui sur ladite touche. Deux autres LEDs d'ambiance L6 et L7, de type LED RGB, servent à rétro-éclairer le boîtier 11 en position active, lorsque la télécommande 10 est retirée par un utilisateur de son support 40. Selon le mode de fonctionnement de la télécommande 10, la couleur du rétro-éclairage est différente et sert de repère visuel pour l'utilisateur. La télécommande 10 comporte en outre au moins un capteur de mouvement 18 en trois dimensions, tel qu'un accéléromètre qui permet de commander des fonctions par des mouvements appliqués à la télécommande, comme expliqué plus loin. Elle comporte aussi un microphone 17 apte à capter le souffle de l'utilisateur à travers un orifice ménagé dans le boîtier 11 au droit du microphone 17 pour commander la réinitialisation de la télécommande 10. Elle comporte enfin un gyroscope 20 associé au capteur de mouvement 15 permettant à tout moment à l'électronique d'identifier la position dans l'espace de la télécommande 10 et d'analyser son déplacement pour en déduire la commande à activer afin de limiter au maximum les erreurs de commande et permettre un usage de la télécommande 10 dans toutes les positions.

Cette télécommande 10 est spécialement conçue pour commander plusieurs équipements électriques distincts, à savoir les lampes de chevet 4, les sommiers 2 motorisés et les luminaires d'ambiance 5, 6 :
- en position passive, lorsqu'elle n'est pas manipulée par un utilisateur et qu'elle est rangée dans le support 40, elle est détectée par la centrale de gestion 3 et commande l'éclairage des lampes de chevet 4 soit en mode ambiance, soit en mode lecture selon l'orientation de la télécommande 10 dans ledit support,
- en position active, lorsqu'elle est retirée de son support 40 pour être manipulée par un utilisateur, elle commande les moteurs des sommiers 2 à tête et pied relevables dans un premier mode de fonctionnement appelé mode sommier, ou les luminaires d'ambiance 5, 6 dans un second mode de fonctionnement appelé mode lumière, ces deux modes de fonctionnement utilisant les mêmes touches de commande T1-T5.

Les fonctions des différentes touches de commande T1-T5 sont à présent détaillées au regard de l'exemple d'application décrit. Bien entendu, ces fonctions ne sont données qu'à titre d'exemple, ne sont pas limitatives, et peuvent varier selon les applications et les équipements électriques à commander.

Lorsque la télécommande 10 est retirée de son support 40 par un utilisateur, elle passe d'une position passive à une position active, se place par défaut en mode sommier et est rétro-éclairée de la couleur prédéterminée pour ce mode. L'appui sur une des touches suivantes permet de commander le sommier 2 auquel elle est affiliée.
- La touche T1 de télécommande 10 permet de commander le moteur de la tête du sommier 2 pour monter et descendre le matelas au niveau des cervicales. Un contact du doigt sur la touche T1 active le contrôle de ce moteur et une rotation du poignet de la main tenant la télécommande 10 selon un axe sensiblement perpendiculaire au poignet donne le sens de rotation du moteur : vers le haut pour monter la tête et vers le bas pour la descendre. La durée de rotation du moteur est déterminée par la durée d'appui sur la touche T1 et le moteur s'arrête dès que le doigt est retiré.
- La touche T2 permet de commander le moteur du dos du sommier 2 pour monter et descendre le matelas au niveau des dorsales. Un contact du doigt sur la touche T2 active le contrôle de ce moteur et une rotation du poignet de la main tenant la télécommande 10 selon un axe sensiblement perpendiculaire au poignet donne le sens de rotation du moteur : vers le haut pour monter le dos et vers le bas pour le descendre. La durée de rotation du moteur est déterminée par la durée d'appui sur la touche T2 et le moteur s'arrête dès que le doigt est retiré.
- La touche T3 permet de commander le moteur des pieds du sommier 2 pour monter et descendre le matelas au niveau des jambes. Un contact du doigt sur la touche T3 active le contrôle de ce moteur et une rotation du poignet de la main tenant la télécommande 10 selon un axe sensiblement perpendiculaire au poignet donne le sens de rotation du moteur : vers le haut pour monter les pieds et vers le bas pour les descendre. La durée de rotation du moteur est déterminée par la durée d'appui sur la touche T3 et le moteur s'arrête dès que le doigt est retiré.
- La touche T4 permet de commander les trois moteurs simultanément de la tête, du dos et des pieds du sommier 2, pour monter et descendre le matelas au niveau des trois zones. Un contact du doigt sur la touche T4 active le contrôle simultané des moteurs et une rotation du poignet de la main tenant la télécommande 10 selon un axe sensiblement perpendiculaire au poignet donne le sens de rotation du moteur : vers le haut pour monter les trois zones et vers le bas pour les descendre. La durée de rotation du moteur est déterminée par la durée d'appui sur la touche T4 et le moteur s'arrête dès que le doigt est retiré.
- La touche T5 permet de passer en mode « master » et de prendre le contrôle de l'autre sommier 2, situé à côté. Un appui sur cette touche de plus de 3 secondes passe la télécommande 10 en mode « master » et change la couleur du rétro-éclairage pour signaler ce mode. Les touches T1 à T4 commandent les moteurs du sommier 2 d'à côté de la même manière que pour le sommier à laquelle elle est affiliée.

Pour passer en mode lumière, l'utilisateur secoue la télécommande 10, la couleur du rétro-éclairage change pour signaler ce mode de fonctionnement. L'appui sur une des touches suivantes permet de commander les bandeaux lumineux 5 et les spots 6 du lit 1 à baldaquin. Sans action sur la télécommande 10, elle reprend son état initial en mode sommier et change à nouveau de couleur de rétro-éclairage.
- La touche T1 de télécommande 10 permet de commander l'intensité lumineuse (si l'intensité est égale à 0 alors l'éclairage d'ambiance est éteint). Un contact du doigt sur la touche T1 active le contrôle des LEDs d'ambiance et une rotation du poignet de la main tenant la télécommande 10 selon un axe sensiblement perpendiculaire au poignet donne le sens de la variation de l'intensité lumineuse : vers le haut pour augmenter cette intensité et vers le bas pour la diminuer. La variation de l'intensité lumineuse s'arrête dès que le doigt est retiré de la touche T1.
- La touche T2 permet de commander la saturation lumineuse (à savoir l'intensité d'une couleur). Un contact du doigt sur la touche T2 active le contrôle des LEDs d'ambiance et une rotation du poignet de la main tenant la télécommande 10 selon un axe sensiblement perpendiculaire au poignet donne le sens de la variation de la saturation lumineuse : vers le haut pour augmenter cette saturation et vers le bas pour la diminuer. La variation de la saturation lumineuse s'arrête dès que le doigt est retiré de la touche T2.
- La touche T3 permet de commander la couleur de l'éclairage d'ambiance sur un cercle chromatique virtuel. Un contact du doigt sur la touche T3 active le contrôle des LEDs d'ambiance et une rotation du poignet de la main tenant la télécommande 10 selon un axe sensiblement perpendiculaire au poignet donne le sens de la variation des couleurs : vers le haut la variation s'effectue dans le sens horaire sur le cercle chromatique et vers le bas elle s'effectue dans le sens antihoraire sur le cercle chromatique. La modification de la couleur de l'éclairage s'arrête dès que le doigt est retiré de la touche T3.
- Les touches T4 et T5 ne sont pas utilisées en mode lumière.

Si l'utilisateur souffle sur la télécommande 10 au droit du microphone 17, elle se réinitialise, c'est à dire que tous les éclairages s'éteignent et le lit se remet en position initiale.

Lorsque l'utilisateur replace la télécommande 10 dans son support 40, elle est détectée par la centrale de gestion 3. Si la LED de puissance 17 est dirigée vers l'utilisateur, elle s'allume et forme une liseuse, et si la LED de puissance 17 est dirigée vers le support 40, l'ampoule 43 de la lampe de chevet 4 s'allume. Pour éteindre l'un ou l'autre éclairage, la télécommande 10 doit être retirée tout simplement ou retirée puis replacée dans son support 40 à la manière d'un interrupteur à tirette ou encore l'utilisateur peut souffler sur le microphone 17. Dans tous les cas, l'ampoule 43 de la lampe de chevet 4 reste allumer quelques secondes avant de s'éteindre.

En position passive, lorsque la télécommande 10 est logée dans son support 40, les batteries 13 se rechargent automatiquement sur le réseau d'alimentation électrique grâce à la connexion entre les plots de contact 12 et 42.

### Possibilités d'application industrielle :

La structure de la télécommande 10 et sa carte électronique 14, de même que les équipements électriques associés 2, 4, 5, 6 et la centrale de gestion 3, sont réalisables industriellement par tout procédé connu et applicable au domaine de la motorisation pour tout mobilier tel que la literie, les canapés, convertibles, fauteuils, sièges, etc. conformément à la description ci-dessus mais adaptable à tout autre domaine dans lequel il peut être utile de commander plusieurs équipements électriques avec une seule et même télécommande.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Télécommande (10) sans fil agencée pour commander au moins deux équipements électriques (4, 2, 5, 6) distincts, notamment un équipement lumineux (4) en tant que premier équipement tel qu'une lampe, un plafonnier, une lampe de chevet, un bandeau lumineux ou similaire, et un équipement motorisé (2) en tant que deuxième équipement tel qu'un lit, un canapé, un convertible, un fauteuil, un siège ou similaire, ladite télécommande comportant au moins un boîtier (11) apte à être manipulé par un utilisateur et comportant des moyens de commande (T1-T5, 18, 19) correspondant à une ou plusieurs fonctions de chacun desdits équipements, une carte électronique (14) alimentée par au moins une batterie (13) et agencée pour recevoir des ordres desdits moyens de commande et les transformer en actions correspondant auxdites fonctions pour chacun desdits équipements par des moyens de communication sans fil entre au moins un émetteur prévu dans ladite télécommande et un récepteur couplé auxdits équipements, télécommande **caractérisée en ce qu'**elle comporte des moyens de fixation (15) agencés pour l'assembler à un support (40) couplé à un premier équipement (4) lorsqu'elle occupe une position passive dans laquelle elle n'est pas manipulée par un utilisateur, et pour la retirer dudit support (40) lorsqu'elle occupe une position active dans laquelle elle est manipulée par un utilisateur, **en ce qu'**elle comporte des connexions électriques (12) agencées pour, en position passive, se raccorder sur des connexions électriques (42) correspondantes prévues dans ledit support (40) de sorte à commander l'alimentation électrique dudit premier équipement (4) et recharger ladite batterie (13) sur le réseau d'alimentation électrique, et **en ce qu'**elle comporte, en position active, au moins un premier mode de fonctionnement dans lequel lesdits moyens de commande (T1-T5, 18, 19) sont agencés pour commander les fonctions dudit deuxième équipement (2).

2. Télécommande selon la revendication 1, **caractérisée en ce que** lesdites connexions électriques comportent au moins une première paire de plots de contact (12), disposée dans le boitier (11) de la télécommande (10), raccordée aux bornes de ladite batterie (13) et agencée pour se connecter audit réseau d'alimentation électrique lorsque la télécommande (10) est assemblée au support (40) dudit premier équipement (4) pour commander l'éclairage du premier équipement (4) et recharger ladite batterie (13).

3. Télécommande selon la revendication 2, **caractérisée en ce que** lesdites connexions électriques comportent une seconde paire de plots de contact (12), disposée dans le boitier (11) de la télécommande (10) à distance de ladite première paire de plots de contact (12), couplée à au moins une diode électroluminescente de puissance (17) prévue dans ledit boîtier (11) et apte à créer un faisceau de lumière, ladite seconde paire de plots de contact (12) étant raccordée aux bornes de ladite batterie (13) et agencée pour se connecter audit réseau d'alimentation électrique lorsque la télécommande (10) est assemblée au support (40) dudit premier équipement (4) pour commander l'éclairage de ladite diode électroluminescente de puissance (17) et recharger ladite batterie (13).

4. Télécommande selon l'une quelconque des revendications précédentes, **caractérisée en ce que** lesdits moyens de fixation sont magnétiques et comportent au moins un aimant permanent (15) disposé dans le boîtier (11) de la télécommande (10) et agencé pour créer un couplage magnétique avec un aimant permanent (45) complémentaire disposé dans le support (40) dudit premier équipement (4) lorsque ladite télécommande (10) est en position passive.

5. Télécommande selon la revendication 4, **caractérisée en ce qu'**elle comporte au moins deux aimants permanents (15) disposés dans le boîtier (11) de la télécommande (10) à distance l'un de l'autre et agencés pour permettre l'assemblage de ladite télécommande (10) au support (40) dudit premier équipement (4) dans deux positions différentes.

6. Télécommande selon l'une quelconque des revendications précédentes, **caractérisée en ce que** lesdits moyens de commande comportent au moins des touches de commande (T1-T5) et un capteur de mouvement (18) intégrés au boitier (11) de la télécommande (10).

7. Télécommande selon la revendication 6, **caractérisée en ce que** lesdites touches de commande (T1-T5) sont des touches sensitives.

8. Télécommande selon la revendication 6, **caractérisée en ce que** ledit capteur de mouvement (18) est un accéléromètre.

9. Télécommande selon la revendication 6, **caractérisée en ce qu'**elle comporte au moins deux modes de fonctionnement, ledit premier mode de fonctionnement pour commander ledit deuxième équipement (2) et un second mode de fonctionnement pour commander un troisième équipement électrique distinct, notamment un équipement lumineux d'ambiance (5, 6), **en ce que** lesdits moyens de commande (T1-T5, 18, 19) utilisés dans chacun des modes de fonctionnement sont communs, et **en ce que** ledit capteur de mouvement (18) est agencé pour basculer d'un mode de fonctionnement à l'autre par détection de secousses appliquées à ladite télécommande (10).

10. Télécommande selon la revendication 9, **caractérisée en ce que** lesdites touches de commande (T1-T5) sont couplées audit capteur de mouvement (18) et agencées pour actionner certaines fonctions desdits équipements (2, 5, 6) par rotation de ladite télécommande (10) entre une position levée et une position abaissée.

11. Télécommande selon l'une quelconque des revendications précédentes, **caractérisée en ce que** lesdits moyens de commande comportent au moins un interrupteur général (19) intégré audit boitier (11) et agencé pour réinitialiser ladite télécommande (10).

12. Télécommande selon la revendication 11. **caractérisée en ce que** ledit interrupteur général est couplé à un microphone (19) agencé pour capter le souffle d'un utilisateur à travers un orifice ménagé dans le boîtier (11) de la télécommande (10) au droit dudit microphone.

13. Télécommande selon l'une quelconque des revendications précédentes, **caractérisée en ce que** le boîtier (11) de la télécommande (10) est constitué d'une coque translucide et **en ce que** ladite télécommande (10) comporte à l'intérieur dudit boîtier (11) des diodes électroluminescentes d'ambiance (L6, L7) agencées pour rétro-éclairer ledit boîtier (11) lorsque ladite télécommande (10) est en position active.

14. Télécommande selon la revendication 7, **caractérisée en ce que** chaque touche de commande (T1-T5) est couplée à une diode électroluminescente d'ambiance (L1-L5) agencée pour varier l'intensité lumineuse de ladite touche de commande en fonction du temps d'appui sur ladite touche.

15. Télécommande selon l'une quelconque des revendications précédentes, **caractérisée en ce que** lesdits moyens de commande comportent un gyroscope (20) disposé dans le boîtier (11) de la télécommande (10) et associé audit capteur de mouvement (18) pour identifier la position spatiale de la télécommande (10) et analyser son déplacement pour en déduire la commande à activer.
